# EUROPÄISCHE PATENTSCHRIFT

(11) **EP 2 855 867 B1**
(45) Veröffentlichungstag und Bekanntmachung des Hinweises auf die Patenterteilung: **13.07.2016**
(21) Anmeldenummer: 13720941.7
(22) Anmeldetag: 06.05.2013
(51) Int. Cl.: F01N 3/20, F01N 13/00, F01N 3/035, B01D 53/86

(54) **VERFAHREN ZUM BETREIBEN EINER REDUKTIONSMITTELDOSIERUNG EINES SCR-KATALYSATORSYSTEMS UND ENTSPRECHENDES SCR-KATALYSATORSYSTEM**
METHOD FOR CONTROLLING THE REDUCING AGENT SUPPLY OF A SCR CATALYST SYSTEM AND CORRESPONDING SCR CATALYST SYSTEM
PROCÉDÉ POUR LE CONTRÔL D'AGENT REDUCTEUR D'UN SYSTÈME CATALYTIQUE SCR ET SYSTÈME CATALYTIQUE SCR CORRESPONDANT

(30) Priorität: 02.06.2012 DE 102012010991
(43) Veröffentlichungstag der Anmeldung: 08.04.2015
(73) Patentinhaber: Volkswagen Aktiengesellschaft, 38440 Wolfsburg (DE)
(72) Erfinder: NIGRO, Giampaolo, 38446 Wolfsburg (DE); KÖSTERS, Martina, 30161 Hannover (DE); DÜSTERDIEK, Thorsten, 30659 Hannover (DE)
(86) Internationale Anmeldenummer: PCT/EP2013/059396
(87) Internationale Veröffentlichungsnummer: WO 2013/178435

(56) Entgegenhaltungen:
- EP-A1- 2 295 750
- EP-A1- 2 439 384
- FR-A1- 2 902 139
- US-A1- 2011 023 463

## Beschreibung

Die Erfindung betrifft ein Verfahren zum Betreiben einer Reduktionsmitteldosierung eines nach dem Prinzip der selektiven katalytischen Reduktion (SCR) arbeitenden SCR-Katalysatorsystems. Die Erfindung betrifft ferner ein zur Ausführung des Verfahrens eingerichtetes Katalysatorsystem.

Verbrennungsmotoren, die zeitweise oder überwiegend mit einem mageren Luft-KraftstoffGemisch betrieben werden, produzieren Stickoxide NOₓ (hauptsächlich NO₂ und NO), die NOₓ-reduzierende Maßnahmen erforderlich machen. Eine motorische Maßnahme, um die NOₓ-Rohemission im Abgas zu reduzieren, stellt die Abgasrückführung dar, bei der ein Teil des Abgases des Verbrennungsmotors in die Verbrennungsluft rückgeführt wird, wodurch die Verbrennungstemperaturen gesenkt und somit die NOₓ-Entstehung reduziert wird. Die Abgasrückführung ist jedoch nicht immer ausreichend, um gesetzliche NOₓ-Grenzwerte einzuhalten, weswegen zusätzlich eine aktive Abgasnachbehandlung erforderlich ist, welche die NOₓ-Endemission senkt. Eine bekannte NOₓ-Abgasnachbehandlung sieht den Einsatz von NOₓ-Speicherkatalysatoren vor, die im mageren Betrieb (bei λ > 1) Stickoxide in Form von Nitraten speichern und in kurzen Intervallen mit einer fetten Abgasatmosphäre (λ < 1) die gespeicherten Stickoxide desorbieren und in Gegenwart der im fetten Abgas vorhandenen Reduktionsmittel zu Stickstoff N₂ reduzieren.

Als weiterer Ansatz zur Konvertierung von Stickoxiden in Abgasen magerlauffähiger Verbrennungsmotoren ist der Einsatz von Katalysatorsystemen bekannt, die nach dem Prinzip der selektiven katalytischen Reduktion (SCR für selective catalytic reduction) arbeiten. Diese Systeme umfassen zumindest einen SCR-Katalysator, der in Gegenwart eines dem Abgas zugeführten Reduktionsmittels, üblicherweise Ammoniak NH₃, die Stickoxide des Abgases in Stickstoff und Wasser umwandelt. Dabei kann das Ammoniak aus einer wässrigen Ammoniaklösung dem Abgasstrom zudosiert werden oder aus einer Vorläuferverbindung, beispielsweise Harnstoff in Form einer wässrigen Lösung oder fester Pellets, im Wege der Thermolyse und Hydrolyse erhalten werden. Ein neuer Ansatz für die Ammoniakspeicherung im Fahrzeug stellen NH₃-Speichermaterialien dar, die Ammoniak in Abhängigkeit von der Temperatur reversibel binden. Insbesondere sind in diesem Zusammenhang Metallamminspeicher bekannt, beispielsweise MgCl₂, CaCl₂ und SrCl₂, die Ammoniak in Form einer Komplexverbindung speichern, um dann beispielsweise als MgCl₂(NH₃)ₓ, CaCl₂(NH₃)ₓ beziehungsweise SrCl₂(NH₃)ₓ vorzuliegen. Aus diesen Verbindungen kann durch Zufuhr von Wärme das Ammoniak wieder freigesetzt werden.

Um eine weitere Absenkung der Stickoxidemissionen zu erzielen, sind ferner zweistufige SCR-Katalysatorsysteme bekannt, die eine erste, motornah angeordnete SCR-Abgasreinigungseinrichtung umfassen sowie einen dieser nachgeschalteten SCR-Katalysator, der sich üblicherweise an einer Unterbodenposition des Fahrzeugs befindet. Dabei kann die motornahe SCR-Abgasreinigungseinrichtung insbesondere als ein Partikelfilter ausgestaltet sein, der eine SCR-katalytische Beschichtung aufweist. Ein solcher katalytisch beschichteter Partikelfilter (auch SDPF genannt) vereinigt somit die Funktionen der Zurückhaltung von Rußpartikeln sowie der selektiven katalytischen Reduzierung von Stickoxiden in Gegenwart eines Reduktionsmittels, insbesondere von NH₃. Durch die motornahe Anordnung der SCR-Abgasreinigungseinrichtung beziehungsweise des SDPF wird eine schnelle Aufheizung dieser SCR-Komponente auf ihre Betriebstemperatur erzielt. Dies ermöglicht eine frühzeitige Freigabe der Reduktionsmitteldosierung und somit eine verbesserte NOₓ-Konvertierung im gesamten Fahrzyklus. Der nachgeschaltete SCR-Katalysator dient der weiteren Verbesserung der NOₓ-Konvertierung sowie der Verhinderung der Emission eines Reduktionsmittelschlupfes der motornahen SCR-Einrichtung.

Die motornahe SCR-Abgasreinigungseinrichtung, insbesondere in Form eines motornahen SDPFs, gestattet jedoch nur den Einsatz einer begrenzten Menge an katalytischer SCR-Beschichtung, da andernfalls nicht tolerierbare Abgasgegendrücke entstünden. Somit reicht die NOₓ-Konvertierungsrate der motornahen SCR-Abgasreinigungseinrichtung häufig nicht aus, über das gesamte Betriebskennfeld niedrigen NOₓ-Emissionsanforderungen gerecht zu werden. Aus diesem Grund ist der nachgeschaltete SCR-Katalysator weiterhin erforderlich, wobei sein Katalysatorvolumen jedoch gegenüber SCR-Konzepten, die ausschließlich einen Unterboden-SCR-Katalysator verwenden, reduziert werden kann.

DE 102 47 989 A1 beschreibt ein SCR-Katalysatorsystem, das einen Oxidationskatalysator sowie einen nachgeschalteten SCR-Katalysator aufweist. Dabei ist die Zuführeinrichtung zur Zuführung des Reduktionsmittels in den Abgasstrom in dem Oxidationskatalysator integriert.

Auf diese Weise soll eine gute Verteilung des Reduktionsmittels sowie eine Verkürzung der Mischstrecke erreicht werden.

Aus DE 10 2005 055 240 A1 ist ein SCR-Katalysatorsystem mit einem Unterboden-SCR-Katalysator bekannt. Stromauf des Unterboden-SCR-Katalysators ist der Abgasstrang in einen Haupt- und einen Nebenabgasstrang unterteilt. In dem Hauptabgasstrang ist ein Partikelfilter angeordnet. Stromauf des Partikelfilters ist ein Oxidationskatalysator mit einer diesem vorgeschalteten Kohlenwasserstoffinjektionseinrichtung angeordnet. Durch die exotherme katalytische Oxidation der zugeführten Kohlenwasserstoffe im Oxidationskatalysator wird die notwendige Temperatur zur Regeneration des nachgeschalteten Partikelfilters erzeugt. In dem Nebenabgasstrang ist ebenfalls ein Oxidationskatalysator sowie ein kontinuierlich regenerierender Partikelkatalysator angeordnet, der zur Partikeloxidation eine oxidationskatalytische Beschichtung aufweist. Im Normalbetrieb wird der gesamte Abgasstrom durch den Hauptabgasstrang geleitet, wo die Partikel im Partikelfilter zurückgehalten werden. Während des Regenerationsbetriebs des Partikelfilters wird ein Teilabgasstrom durch den Nebenstrang geleitet und der andere Teil über den zu generierenden Partikelfilter im Hauptstrang. Durch den verminderten Abgasmassenstrom im Hauptstrang wird die zur Anhebung der Temperatur erforderliche Energiemenge reduziert, wodurch eine Energieersparnis erzielt werden soll und zudem der SCR-Katalysators thermisch weniger belastet werden soll.

Im Dokument EP 2 439 384 A1 wird eine Abgasreinigungsvorrichtung für eine Brennkraftmaschine und deren Betrieb beschrieben. Die Abgasreinigungsvorrichtung umfasst ein SCR-Katalysatorsystem mit einer ersten SCR-Abgasreinigungseinrichtung und einem dieser nachgeschalteten SCR-Katalysator. Mit einer Reduktionsmitteldosiereinrichtung wird Reduktionsmittel in den Abgasstrom stromauf der ersten SCR-Abgasreinigungseinrichtung eingebracht. Die Reduktionsmitteldosierung wird zumindest in Abhängigkeit von einer Temperatur der ersten SCR-Abgasreinigungseinrichtung und des nachgeschalteten SCR-Katalysators gesteuert.

Der Erfindung liegt die Aufgabe zugrunde, ein Verfahren zum Betreiben einer Reduktionsmitteldosierung eines eingangs beschriebenen zweistufigen SCR-Katalysatorsystems zur Verfügung zu stellen, mit dem eine erhöhte NOₓ-Konvertierungsrate, insbesondere kennfeldweit erzielt wird. Es soll ferner ein zur Ausführung des Verfahrens eingerichtetes SCR-Katalysatorsystem bereitgestellt werden.

Diese Aufgabe wird durch ein Verfahren sowie durch ein SCR-Katalysatorsystem mit den Merkmalen der unabhängigen Ansprüche gelöst. Weitere vorteilhafte Ausgestaltungen der Erfindung sind Gegenstand der abhängigen Ansprüche.

Das erfindungsgemäße Verfahren zum Betreiben einer Reduktionsmitteldosierung bezieht sich auf ein SCR-Katalysatorsystem eines Verbrennungsmotors, das eine erste (insbesondere motornahe) SCR-Abgasreinigungseinrichtung und einen, dieser nachgeschalteten SCR-Katalysator aufweist sowie eine Reduktionsmitteldosiereinrichtung zur Dosierung eines Reduktionsmittels in den Abgasstrom stromauf der ersten SCR-Abgasreinigungseinrichtung.

Erfindungsgemäß erfolgt die Reduktionsmitteldosierung zumindest in Abhängigkeit von einer Temperatur der ersten SCR-Abgasreinigungseinrichtung und des nachgeschalteten SCR-Katalysators gesteuert, wobei
(I) wenn die Temperatur der ersten SCR-Abgasreinigungseinrichtung größer oder gleich einer vorbestimmten Mindesttemperatur ist und die Temperatur des nachgeschalteten SCR-Katalysators kleiner als eine vorbestimmte Mindesttemperatur ist, die Reduktionsmitteldosierung in einem ersten Betriebsmodus so erfolgt, dass ein Reduktionsmittelfüllstand der ersten SCR-Abgasreinigungseinrichtung kleiner als ihr maximaler Reduktionsmittelfüllstand ist, und
(II) wenn die Temperatur des nachgeschalteten SCR-Katalysators größer oder gleich seiner Mindesttemperatur ist, die Reduktionsmitteldosierung zumindest zeitweise in einem zweiten Betriebsmodus so erfolgt, dass der Reduktionsmittelfüllstand der ersten SCR-Abgasreinigungseinrichtung größer ist als ihr maximaler Reduktionsmittelfüllstand, sodass ein die erste SCR-Abgasreinigungseinrichtung passierender Reduktionsmitteldurchbruch den nachgeschalteten SCR-Katalysator beaufschlagt.

Dabei versteht es sich, dass die Mindesttemperatur der SCR-Abgasreinigungseinrichtung sowie des nachgeschalteten SCR-Katalysators jeweils so gewählt ist, dass sie eine gewisse NOₓ-Konvertierungsleistung gewährleistet, d.h. dass sie die zumindest der unteren Temperaturgrenze eines Aktivitätsfensters bezüglich der NOₓ-Konvertierung entspricht. Vorzugsweise wird die jeweilige Mindesttemperatur entsprechend einer einsetzenden katalytischen Betriebsbereitschaft der jeweiligen Abgasreinigungskomponente gewählt. Zweckmäßigerweise kann hier auch die so genannte jeweilige Light-Off-Temperatur gewählt werden, die definitionsgemäß derjenigen Temperatur entspricht, bei welcher 50 % der maximalen Konvertierungsleistung vorliegt. Die Light-Off-Temperatur ist insbesondere abhängig von der konkreten Zusammensetzung der katalytischen Beschichtung und kann für die erste SCR-Abgasreinigungseinrichtung und den nachgeschalteten SCR-Katalysator unterschiedlich sein.

Erfindungsgemäß erfolgt somit die Reduktionsmitteldosierung wenigstens in zwei Betriebsmodi, wobei entweder nur die erste SCR-Komponente mit Reduktionsmittel beaufschlagt und beladen wird oder mit einer einzigen Reduktionsmitteldosiereinrichtung beide SCR-Komponenten mit Reduktionsmittel beaufschlagt und beladen werden. Im letzteren Fall erfolgt die Beladung des nachgeschalteten SCR-Katalysators durch Überladung und Überlaufen der motornahen SCR-Abgasreinigungseinrichtung.

Das erfindungsgemäße Verfahren ermöglicht einerseits mittels einer einzigen Reduktionsmitteldosiereinrichtung, welche das Reduktionsmittel stromauf der ersten SCR-Abgasreinigungskomponente in den Abgasstrom dosiert, die gleichzeitige Beaufschlagung beider Komponenten mit dem Reduktionsmittel. Darüber hinaus lassen sich mit dem erfindungsgemäßen Verfahren auch die Reduktionsmittelfüllstände beider SCR-Komponenten steuern. Grundsätzlich weisen SCR-Beschichtungen eine gewisse Speicherkapazität für das Reduktionsmittel, beispielsweise Ammoniak auf. Dabei zeigt es sich, dass die NOₓ-Konvertierungsleistung beider SCR-Bauteile sich erhöhen lässt, wenn eine gewisse Reduktionsmittelmenge in der jeweiligen SCR-Beschichtung eingespeichert ist. Indem ferner die Reduktionsmitteldosierung in Abhängigkeit der Temperaturen der beiden SCR-Komponenten in der erfindungsgemäßen Weise gesteuert wird, wird ferner sichergestellt, dass eine Beaufschlagung der jeweiligen Komponente mit dem Reduktionsmittel nur dann erfolgt, wenn diese Komponente ihre vorbestimmte Mindesttemperatur, welche eine effektive Speicherung und/oder katalytische Umsetzung des Reduktionsmittels gewährleistet, vorliegt. Auf diese Weise werden unerwünschte Reduktionsmittelemissionen wirkungsvoll verhindert.

In einer Ausgestaltung der Erfindung umfasst das SCR-Katalysatorsystem zusätzlich einen Partikelfilter zur Entfernung partikulärer Bestandteile aus dem Abgas. Nach einer alternativen, besonders bevorzugten Ausgestaltung der Erfindung ist die erste SCR-Abgasreinigungseinrichtung als ein eine katalytische SCR-Beschichtung aufweisender Partikelfilter (nachfolgend auch SCR-Partikelfilter, SDPF oder SPF genannt) ausgebildet. Diese Ausgestaltung ist sowohl in Hinblick auf den Bauraumbedarf als auch auf Kosten von Vorteil.

Nach einer weiteren bevorzugten Ausgestaltung der Erfindung wird der Reduktionsmittelfüllstand der ersten SCR-Abgasreinigungseinrichtung in dem ersten und in dem zweiten Betriebsmodus entsprechend zwei unterschiedlichen temperaturabhängigen Soll-Füllstandskennlinien gesteuert. Dabei entspricht es der Erfindung, dass die für den zweiten Betriebsmodus verwendete Soll-Füllstandskennlinie oberhalb der entsprechenden Kennlinie des ersten Betriebsmodus liegt. Insbesondere liegt die Soll-Füllstandskennlinie für die erste SCR-Abgasreinigungseinrichtung im zweiten Betriebsmodus zumindest in einem gewissen Temperaturbereich oberhalb ihres maximalen Reduktionsmittelfüllstandes, sodass in diesem Temperaturbereich gezielt ein Überlaufen des Reduktionsmittels, das heißt ein Reduktionsmitteldurchbruch durch die erste SCR-Abgasreinigungseinrichtung erzwungen wird.

In bevorzugter Ausgestaltung der Erfindung wird im zweiten Betriebsmodus, wenn also beide SCR-Komponenten betriebsbereit sind, ein Soll-Füllstand des nachgeschalteten SCR-Katalysators über den Reduktionsmittelfüllstand der ersten SCR-Abgasreinigungseinrichtung temperaturabhängig gesteuert. Durch die Vorhaltung eines gewissen Soll-Füllstandes des SCR-Katalysators wird seine NOₓ-Konvertierungsleistung verbessert.

Vorzugsweise wird der zweite Betriebsmodus beendet, wenn der Reduktionsmittelfüllstand des nachgeschalteten SCR-Katalysators seinen temperaturabhängigen Soll-Füllstand erreicht oder überschreitet. Auf diese Weise wird eine Überladung des SCR-Katalysators und somit ein unerwünschter Reduktionsmitteldurchbruch aus diesem verhindert. Ferner wird der zweite Betriebsmodus beendet, wenn die Temperatur des SCR-Katalysators unterhalb seiner Mindesttemperatur fällt. Dies kann beispielsweise bei länger anhaltendem Niedriglastbetrieb des Verbrennungsmotors, beispielsweise im Stadtverkehr, der Fall sein.

Es versteht sich, dass wenn keine der beiden SCR-Komponenten ihre jeweilige Mindesttemperatur aufweist, keine Reduktionsmitteldosierung vorgenommen wird.

Nach einer bevorzugten Ausgestaltung wird nach einer so erzwungenen Beendigung des zweiten Betriebsmodus die Reduktionsmitteldosierung wieder im ersten Betriebsmodus betrieben, wobei der Reduktionsmittelfüllstand der ersten SCR-Abgasreinigungseinrichtung kleiner als ihr maximaler Reduktionsmittelfüllstand gesteuert wird. Auf diese Weise wird ein weiterer Reduktionsmitteldurchbruch durch die motornahe SCR-Abgasreinigungseinrichtung unterbunden. Dies erfolgt solange, bis der Reduktionsmittelfüllstand des SCR-Katalysators einen vorbestimmten temperaturabhängigen Mindestfüllstand erreicht oder unterschreitet und wenn gleichzeitig die Temperatur des SCR-Katalysators größer oder gleich seiner Mindesttemperatur ist. Auf diese Weise wird somit in Abhängigkeit von der Temperatur des SCR-Katalysators sowie seinem Reduktionsmittelfüllstand zwischen dem ersten und dem zweiten Betriebsmodus hin- und hergeschaltet und die Reduktionsmitteldosierung füllstandsgesteuert unter Verwendung der beiden Soll-Füllstandskennlinien für die erste SCR-Abgasreinigungseinrichtung durchgeführt.

Vorzugsweise erfolgt eine kontinuierliche Ermittlung des Reduktionsmittelfüllstands der SCR-Abgasreinigungseinrichtung und/oder des nachgeschalteten SCR-Katalysators. Dabei kann die Ermittlung im Wege einer Bilanzierung in Abhängigkeit von einem Reduktionsmitteleintrag in die jeweilige SCR-Komponente, in Abhängigkeit von einem katalytischen Reduktionsmittelverbrauch sowie in Abhängigkeit von einem Reduktionsmittelaustrag aus der jeweiligen SCR-Komponente ermittelt werden. Im Falle der motornahen SCR-Abgasreinigungseinrichtung entspricht der Reduktionsmitteleintrag der stromauf von dieser Komponente zudosierten Reduktionsmittelmenge. Der katalytische Reduktionsmittelverbrauch kann anhand der NOₓ-Rohemissionen des Verbrennungsmotors unter Berücksichtigung der Konvertierungsleistung der ersten SCR-Abgasreinigungskomponente ermittelt werden. Die NOₓ-Rohemissionen können in Abhängigkeit von einem Betriebspunkt des Verbrennungsmotors modelliert werden oder mittels eines stromauf der SCR-Abgasreinigungseinrichtung angeordneten NOₓ-Sensors ermittelt werden oder durch eine Kombination von Modellierung und Messung. Der Reduktionsmittelaustrag aus der ersten SCR-Abgasreinigungseinrichtung kann einerseits durch eine Reduktionsmitteldesorption beispielsweise aufgrund einer Temperatur außerhalb des Betriebsfensters bedingt werden sowie durch einen Reduktionsmitteldurchbruch aufgrund einer erschöpften Beladungskapazität. Folglich wird der Reduktionsmittelfüllstand der ersten SCR-Abgasreinigungseinrichtung in Abhängigkeit von der zudosierten Reduktionsmittelmenge, die NOₓ-Rohemissionen des Verbrennungsmotors, der Reduktionsmitteldesorption und/oder des Reduktionsmitteldurchbruchs bestimmt.

Im Falle des nachgeschalteten SCR-Katalysators bestimmt sich sein Reduktionsmitteleintrag durch den Reduktionsmitteldurchbruch und der Reduktionsmitteldesorption der ersten SCR-Abgasreinigungseinrichtung sowie eines katalytischen Reduktionsmittelverbrauchs des SCR-Katalysators. Eine Reduktionsmitteldesorption oder ein Reduktionsmitteldurchbruch aus dem SCR-Katalysator kann unberücksichtigt bleiben, da diese bei der erfindungsgemäßen Steuerung der Reduktionsmitteldosierung praktisch nicht auftreten. Somit wird der Reduktionsmittelfüllstand des SCR-Katalysators vorzugsweise in Abhängigkeit von dem Reduktionsmitteldurchbruch und der Reduktionsmitteldesorption der ersten SCR-Abgasreinigungseinrichtung ermittelt sowie dem katalytischen Reduktionsmittelverbrauch des SCR-Katalysators.

Bei dem zudosierten Reduktionsmittel handelt es sich vorzugsweise um Ammoniak NH₃ oder um eine Vorläuferverbindung von diesem, wobei hier insbesondere Harnstoff in Betracht kommt. Der Harnstoff kann in Form fester Harnstoffpellets, vorzugsweise jedoch in Form einer wässrigen Harnstofflösung eingesetzt werden. Der zudosierte Harnstoff reagiert im Wege der Thermolyse und Hydrolyse unter Freisetzung von NH₃. Grundsätzlich kann im Rahmen der Erfindung das Reduktionsmittel Ammoniak auch über NH₃-Speichermaterialien bevorratet werden, die Ammoniak in Abhängigkeit von der Temperatur reversibel binden beziehungsweise freisetzen. Entsprechende Metallamminspeicher wurden eingangs bereits erläutert.

Die Erfindung betrifft ferner ein SCR-Katalysatorsystem, welches eine Steuerung umfasst, die eingerichtet ist, das erfindungsgemäße Verfahren zum Betreiben der Reduktionsmitteldosierung auszuführen. Zu diesem Zweck umfasst die Steuerung insbesondere einen entsprechenden computerlesbaren Programmalgorithmus sowie zur Ausführung des Verfahrens notwendige Kennlinien und/oder Kennfelder.

Schließlich betrifft die Erfindung ein entsprechendes SCR-Katalysatorsystem umfassendes Fahrzeug.

Die Erfindung wird nachfolgend in Ausführungsbeispielen anhand der zugehörigen Zeichnungen näher erläutert. Es zeigen:
- Figur 1: eine schematische Darstellung einer Abgasanlage mit einem erfindungsgemäßen SCR-Katalysatorsystem nach einer Ausgestaltung der Erfindung;
- Figur 2: ein Fließdiagramm eines Verfahrens zum Betreiben einer Reduktionsmitteldosierung des SCR-Katalysatorsystems aus Figur 1 nach einer Ausgestaltung der Erfindung;
- Figur 3: Verläufe einer ersten und einer zweiten Soll-Füllstandskennlinie (F1, F2) für den Reduktionsmittelfüllstand (NH3_SPF) des motornahen SCR-Partikelfilters sowie seines maximalen Reduktionsmittelfüllstands (NH3_SPF_max) in Abhängigkeit von seiner mittleren Temperatur; und
- Figur 4: Verläufe einer Soll-Füllstandskennlinie (NH3_SCR_soll) sowie des maximalen Reduktionsmittelfüllstands (NH3_SCR_max) des nachgeschalteten SCR-Katalysators (NH3_SPF) in Abhängigkeit von seiner mittleren Temperatur.

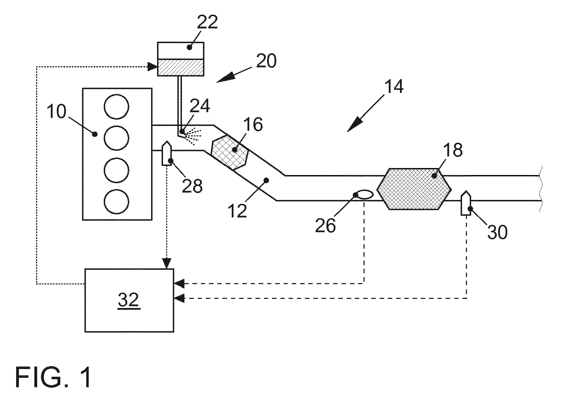

Figur 1 zeigt einen Verbrennungsmotor 10 eines weiter nicht dargestellten Kraftfahrzeugs. Bei dem Verbrennungsmotor 10 handelt es sich um einen permanent oder zumindest zeitweise mager betriebenen Motor, hier einen (selbstzündenden) Dieselmotor. Grundsätzlich ist die Erfindung jedoch nicht auf Dieselmotoren beschränkt und kann auch bei mager betreibbaren Ottomotoren, insbesondere direkteinspritzenden Ottomotoren angewendet werden.

Ein Abgas des Verbrennungsmotors 10 wird über einen nicht dargestellten Abgaskrümmer in einen Abgaskanal 12 eingeleitet, wo es durch ein insgesamt mit 14 bezeichnetes SCR-Katalysatorsystem zur Konvertierung von im Abgas vorhandenen Stickoxiden nachbehandelt wird. Selbstverständlich kann das Abgassystem weitere Abgasnachbehandlungskomponenten enthalten, die hier nicht näher dargestellt oder erwähnt werden.

Das SCR-Katalysatorsystem 14 weist an einer motornahen Position eine erste SCR-Abgasreinigungskomponente 16 auf, d.h. eine Komponente die eine nach dem Prinzip der selektiven katalytischen Reduktion arbeitende SCR-Beschichtung aufweist. Im vorliegenden Fall handelt es sich bei der SCR-Abgasreinigungskomponente 16 um einen, eine katalytische SCR-Beschichtung aufweisenden Dieselpartikelfilter (auch mit SDPF oder SCR-Partikelfilter bezeichnet), der neben seiner katalytischen SCR-Beschichtung eine Rückhaltefunktion für partikuläre Abgasbestandteile, wie Rußpartikel aufweist. Der Aufbau von Dieselpartikelfiltern auch solchen mit katalytischen Beschichtungen ist grundsätzlich bekannt und bedarf keiner näheren Erläuterung. Dabei wird im Rahmen der vorliegenden Erfindung mit dem Begriff "motornah" ein Abstand zwischen Zylinderauslass des Verbrennungsmotors 10 und Stirnfläche der SCR-Abgasreinigungskomponente 16 von höchstens 120 cm, insbesondere höchstens 100 cm, vorzugsweise höchstens 80 cm verstanden. In einer konkreten Ausführung beträgt der Abstand etwa 75 cm.

Das zweistufige SCR-Katalysatorsystem 14 umfasst zudem einen nachgeschalteten, vorzugsweise an einer Unterbodenposition des Fahrzeugs angeordneten SCR-Katalysator 18, der ebenfalls eine katalytische SCR-Beschichtung aufweist, welche gleich oder ähnlich ausgestaltet sein kann wie die des SCR-Partikelfilters 16. Der SCR-Katalysator 18 weist typischerweise ein größeres Volumen sowie eine insgesamt größere Menge der katalytischen SCR-Beschichtung auf. Ein solches Katalysatorsystem, bei dem die Katalysatorfunktion auf zwei Abgasreinigungskomponenten verteilt wird, wird auch als Zwei-Brick-System bezeichnet.

Zudem umfasst das SCR-Katalysatorsystem 14 eine Reduktionsmitteldosiereinrichtung 20 zur Dosierung eines Reduktionsmittels stromauf des SCR-Partikelfilters 16. Im vorliegenden Beispiel wird das Reduktionsmittel in Form einer wässrigen Harnstofflösung (Harnstoff-WasserLösung HWL) eingesetzt, welche in einem Reduktionsmittelvorratsbehälter 22 bevorratet wird. Von hier aus wird es über eine hier nicht dargestellte Fördereinrichtung, beispielsweise eine Pumpe, einer Düse 24 zugeführt, welche in den Abgaskanal 12 stromauf des SCR-Partikelfilters 16 mündet. Aufgrund der hohen Abgastemperaturen an dieser Stelle wird der Harnstoff thermolytisch zersetzt, wobei er das eigentliche Reduktionsmittel Ammoniak NH₃ freisetzt.

Optional können zwischen der Düse 24 und dem SCR-Partikelfilter 16 auch Aufbereitungsmittel vorhanden sein, welche die Homogenierung und/oder die Zersetzung des Harnstoffs unterstützen. Das freigesetzte Ammoniak wird entweder in den katalytischen Beschichtungen der SCR-Komponenten 14 und/oder 16 gespeichert oder dort unmittelbar katalytisch mit den Stickoxiden des Abgases des Motors 10 umgesetzt, wobei diese zu Stickstoff N₂ reduziert werden.

In dem Abgaskanal 12 sind ferner verschiedene Sensoren angeordnet. Diese umfassen beispielsweise einen Temperatursensor 26, der die Abgastemperatur stromauf des SCR-Katalysators 18 misst. Es können auch andere Einbauorte für den Temperatursensor 26 realisiert sein oder mehrere Temperatursensoren an geeigneten Positionen des Abgaskanals 12 vorhanden sein. Ferner ist stromauf des SCR-Partikelfilters 16 ein erster NOₓ-Sensor 28 installiert, welcher die NOₓ-Rohemission des Verbrennungsmotors 10 erfasst. Alternativ kann auf den NOₓ-Sensor 28 auch verzichtet werden und die NOₓ-Rohemission in Abhängigkeit von einem aktuellen Motorbetriebspunkt, insbesondere von der Drehzahl und Last, unter Verwendung entsprechender Kennfelder ermittelt werden. Stromab des SCR-Katalysators 18 ist ein zweiter NOₓ-Sensor 30 angeordnet, der der Überwachung des Katalysatorsystems im Wege der On-board-Diagnose (OBD) dient. Da NOₓ-Sensoren auch über eine Querempfindlichkeit für Ammoniak verfügen, ist der NOₓ-Sensor 30 auch in der Lage unerwünschte Reduktionsmitteldurchbrüche zu erfassen. Optional kann ein weiterer NOₓ-Sensor auch zwischen den beiden SCR-Komponenten 16, 18 installiert sein.

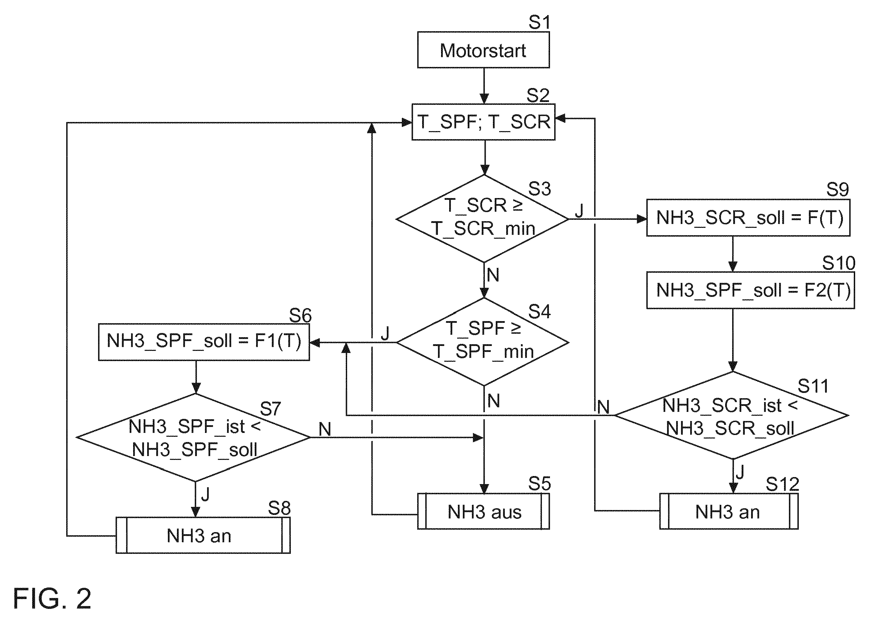

Sämtliche Signale der Sensoren gehen in eine Steuerung 32 ein, welche diese Signale weiterverarbeitet und in Abhängigkeit von Ihnen die Reduktionsmitteldosiereinrichtung 20, insbesondere entsprechende Stellmittel (Pumpen oder Ventile) ansteuert. Hierzu weist die Steuerung 32 insbesondere einen gespeicherten und computerlesbaren Programmalgorithmus auf, sowie notwendige Kennlinien und/oder Kennfelder. Die von der Steuerung 32 ausgeführte Funktion zur erfindungsgemäßen Steuerung der Reduktionsmitteldosierung soll nachfolgend anhand der Figuren 2 bis 4 näher erläutert werden.

Figur 2 zeigt ein Fließdiagramm mit einem vereinfachten Ablauf des erfindungsgemäßen Verfahrens in einer bevorzugten Ausgestaltung. Das Verfahren wird nach jedem Motorstart initialisiert und in regelmäßigen Zyklen wiederholt.

Das Verfahren startet im Schritt S1 mit dem Motorstart. Nach Beendigung des Motorstarts geht es zu S2 über, wo die Temperatur des SCR-Partikelfilters 16 (T_SPF) sowie die Temperatur des SCR-Katalysators 18 (T_SCR) ermittelt werden. Diese Temperaturen können entweder in Abhängigkeit von dem Motorbetriebspunkt des Verbrennungsmotors 10 vollständig modelliert werden oder durch entsprechende Temperatursensoren erfasst werden oder durch eine Kombination aus beidem. Beispielsweise kann die Temperatur des SCR-Katalysators 18 in Abhängigkeit von der mit dem Temperatursensor 26 erfassten Abgastemperatur bestimmt werden.

In der anschließenden Abfrage S3 wird überprüft, ob die Temperatur des SCR-Katalysators 18 größer oder gleich einer vorbestimmten Mindesttemperatur T_SCR_min von beispielsweise 170 °C ist. Die Mindesttemperatur entspricht zumindest einer Temperatur, bei welcher eine NOₓ-Konvertierungsleistung des SCR-Katalysators 18 einsetzt, insbesondere seiner Light-Off-Temperatur, bei der definitionsgemäß 50% der maximalen Konvertierungsleistung vorliegt. Unmittelbar nach Motorstart ist davon auszugehen, dass die Mindesttemperatur T_SCR_min des SCR-Katalysators 18 noch nicht vorliegt. In diesem Fall geht das Verfahren zu der Abfrage S4 über, wo abgefragt wird, ob die Temperatur T_SPF des SCR-Partikelfilters 16 größer oder gleich einer Mindesttemperatur T_SPF_min für den SCR-Partikelfilter 16 von beispielsweise 180 °C ist. Auch diese Temperaturschwelle ist so gelegt, dass eine NOₓ-Mindestkonvertierungsleistung des SCR-Partikelfilters 16 vorliegt, beispielsweise die NOₓ-Konvertierung gerade einsetzt oder die Light-Off-Temperatur des SCR-Partikelfilters 16 erreicht ist. Wird die Abfrage in S4 verneint, das heißt, weder der SCR-Partikelfilter 16 noch der SCR-Katalysator 18 weist seine jeweilige Mindesttemperatur auf, geht das Verfahren zu Schritt S5, wo die Reduktionsmitteldosierung durch die Dosiereinrichtung 20 deaktiviert wird beziehungsweise deaktiviert bleibt. Das Verfahren geht von S5 zurück zu Schritt S2, wo eine erneute Feststellung der Temperaturen T_SPF und T_SCR erfolgt, so dass die Abfragen S3 und S4 zyklisch wiederholt werden.

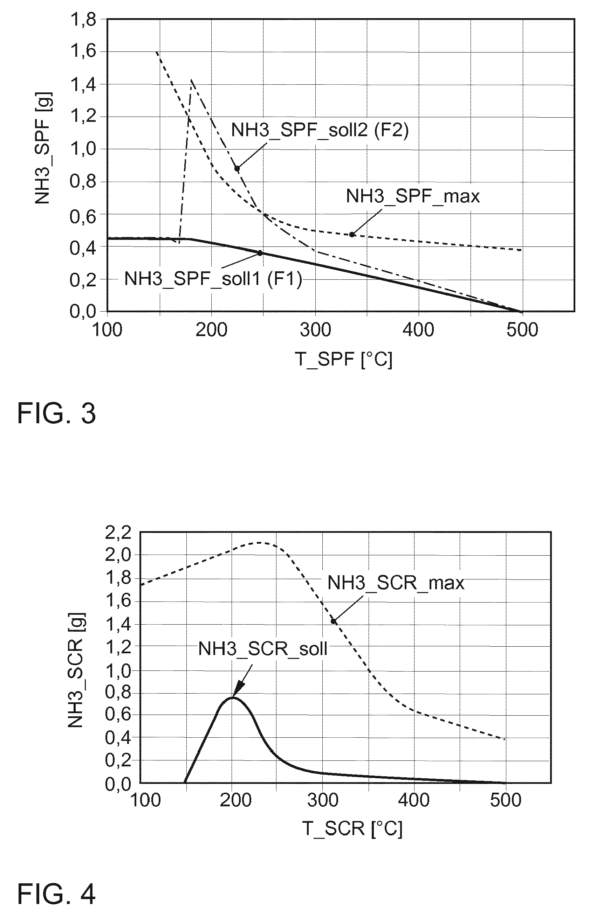

Im Laufe des Motorwarmlaufs erreicht zuerst der SCR-Partikelfilter 16 seine vorbestimmte Mindesttemperatur T_SPF_min. Gleichzeitig hat üblicherweise der Unterboden-SCR-Katalysator 18 seine Mindesttemperatur T_SCR_min noch nicht erreicht. In diesem Fall wird die Abfrage S4 bejaht und das Verfahren geht zu S6 über, wo in Abhängigkeit von der in Schritt S1 bestimmten Temperatur T_SPF des SCR-Partikelfilters 16 ein Soll-Füllstand NH3_SPF_soll für den SCR-Partikelfilter 16 vorbestimmt wird. Dies erfolgt anhand einer ersten Soll-Füllstandskennlinie F1, die in Figur 3 dargestellt ist. Figur 3 zeigt ferner einen maximalen Reduktionsmittelfüllstand NH3_SPF_max des SCR-Partikelfilters 16. Es ist erkennbar, dass die erste Soll-Füllstandskennlinie F1 im gesamten Temperaturbereich unterhalb des maximalen NH₃-Füllstands liegt. Mit anderen Worten erfolgt in dem Fall, dass der SCR-Katalysator 18 seine Mindesttemperatur noch nicht erreicht hat, gleichzeitig der SCR-Partikelfilter 16 jedoch schon seine Mindesttemperatur aufweist, die Reduktionsmitteldosierung in einem ersten Betriebsmodus so, dass der Reduktionsmittelfüllstand des SCR-Partikelfilters 16 kleiner als sein maximaler Reduktionsmittelfüllstand NH3_SPF_max ist. Ein Reduktionsmitteldurchbruch durch den SCR-Partikelfilter 16 wird in diesem ersten Betriebsmodus somit unterbunden.

In der anschließenden Abfrage in S7 wird ein ermittelter Ist-Füllstand NH3_SPF_ist des SCR-Partikelfilters 16 mit dem angeforderten Soll-Füllstand gemäß der ersten Soll-Füllstandskennlinie F1 verglichen. Ein entsprechender zwischengeschalteter Schritt, in welchem der Ist-Füllstand des SCR-Partikelfilters 16 in Abhängigkeit von der zudosierten Reduktionsmittelmenge, der NOₓ-Rohemission des Verbrennungsmotors 10 sowie einer eventuellen Reduktionsmitteldesorption und/oder eines Reduktionsmitteldurchbruchs ermittelt wird, ist aus Gründen der Übersichtlichkeit in Figur 2 nicht dargestellt. Es versteht sich jedoch, dass der aktuelle Füllstand kontinuierlich bestimmt wird. Wenn die Abfrage in S7 verneint wird, das heißt der Soll-Füllstand des SCR-Partikelfilters 16 noch nicht erreicht ist, beispielsweise nach einem Motorstart, so geht das Verfahren zu Schritt S8 über, wo die Reduktionsmitteldosierung aktiviert wird. Ausgehend von S8 geht das Verfahren zurück zu Schritt S2 und durchläuft erneut die Temperaturermittlung und -abfragen S3 und S4 sowie die Füllstandsabfrage S7. Solange die Temperaturverhältnisse sich nicht signifikant ändern und der Soll-Füllstand NH3_SPF_soll noch nicht erreicht ist, erfolgt die Reduktionsmitteldosierung solange, bis die temperaturabhängige Soll-Füllstandsschwelle für den SCR-Partikelfilter 16 erreicht ist. In diesem Fall geht das Verfahren von der Abfrage von S7 zu S5 über, wo die Reduktionsmitteldosierung deaktiviert wird. Bei unveränderten Temperaturverhältnissen bleibt die NH₃-Dosierung solange deaktiviert, bis der Füllstand NH3_SPF_ist den Soll-Füllstand NH3_SPF_soll erneut unterschreitet (Tatsächlich wird hier eine Mindestfüllstandsschwelle mit einem gewissen Abstand unterhalb der Soll-Füllstandsschwelle NH3_SPF_soll vorgegeben, um ein ständiges Umschalten zwischen aktivierter und deaktivierter NH₃-Dosierung zu vermeiden. Diese Abfrage ist aus Gründen der Übersichtlichkeit jedoch hier nicht dargestellt.)

Sobald der nachgeschaltete SCR-Katalysator 18 seine Mindesttemperatur T_SCR_min erreicht hat, wird die Abfrage in S3 bejaht, so dass das Verfahren zu S9 übergeht. In diesem Fall wird nunmehr auch für den nachgeschalteten SCR-Katalysator 18 ein Soll-Füllstand NH3_SCR_soll in Abhängigkeit von seiner Temperatur T_SCR vorgegeben. Diese wird aus einer entsprechenden Kennlinie NH3_SCR_soll (siehe Figur 4) ermittelt. Figur 4 zeigt darüber hinaus den temperaturabhängigen maximalen Soll-Füllstand NH3_SCR_max des SCR-Katalysators 18. Es ist erkennbar, dass der Soll-Füllstand NH3_SCR_soll mit einem deutlichen Sicherheitsabstand zu dem maximalen Füllstand NH3_SCR_max vorbestimmt wird.

Um eine Beaufschlagung des nachgeschalteten SCR-Katalysators 18 mit dem Reduktionsmittel NH₃ zu erzielen, wird erfindungsgemäß ein Reduktionsmitteldurchbruch durch den vorgeschalteten SCR-Partikelfilter 16 verursacht. Zu diesem Zweck wird im anschließenden Schritt S10 der Soll-Füllstand NH3_SPF_soll des SCR-Partikelfilters 16 entsprechend einer zweiten Soll-Füllstandskennlinie F2 bestimmt, welche in Figur 3 gezeigt ist. Erkennbar liegt die zweite Soll-Füllstandskennlinie zumindest in einem bestimmten Temperaturbereich des SCR-Partikelfilters 16 oberhalb seines maximalen Füllstands NH3_SPF_max. Mit anderen Worten wird in diesem Temperaturbereich die Reduktionsmitteldosierung so betrieben, dass der Reduktionsmittelfüllstand der ersten Abgasreinigungseinrichtung (SCR-Partikelfilter 16) größer ist als ihr maximaler Reduktionsmittelfüllstand NH3_SPF_max. Die über den maximalen Füllstand hinausgehende Reduktionsmittelmenge überläuft somit den SCR-Partikelfilter 16 und beaufschlagt den nachgeschalteten SCR-Katalysator 18, so dass dieser mit dem Reduktionsmittel NH₃ beaufschlagt wird.

In der anschließenden Abfrage S11 wird nunmehr der Ist-Reduktionsmittelfüllstand NH3_SCR_ist des SCR-Katalysators 18 mit seinem Soll-Füllstand NH3_SCR_soll verglichen. Nicht dargestellt in Figur 2 ist die Ermittlung des Ist-Reduktionsmittelfüllstandes NH3_SCR_ist des SCR-Katalysators 18, die in Abhängigkeit von dem Reduktionsmittelaustrag aus dem SCR-Partikelfilter 16 sowie dem Reduktionsmittelverbrauch des SCR-Katalysators 18 kontinuierlich erfolgt. Wird die Abfrage S11 verneint, wie dies unmittelbar nach der Umstellung auf den zweiten Betriebsmodus der Fall sein wird, geht das Verfahren zu Schritt S12 über, wo die Reduktionsmitteldosierung aktiviert wird.

Ausgehend von Schritt S12 geht das Verfahren über zu dem Temperaturbestimmungs- und -abfrageblock der Schritte S2 bis S4. Bei unveränderten Temperaturverhältnissen, das heißt solange der SCR-Katalysator 18 seine Mindesttemperatur T_SCR_min aufweist, wird die Reduktionsmitteldosierung gemäß dem zweiten Betriebsmodus, das heißt mit der Füllstandskennlinie F2 des SCR-Partikelfilters 16 fortgesetzt. Dies erfolgt solange, bis der SCR-Katalysator 18 seinen Soll-Füllstand NH3_SCR_soll erreicht. Sobald dies der Fall ist, wird die Abfrage S11 verneint, so dass das Verfahren zu S6 übergeht, wo eine erneute Festlegung des Soll-Füllstands des SCR-Partikelfilters NH3_SPF_soll gemäß der ersten Funktion F1 bestimmt wird. Da im ersten Zyklus nach Verneinung der Abfrage S11 der SCR-Partikelfilter 16 eine Reduktionsmittelbeladung oberhalb der Schwelle gemäß erster Kennlinie F1 aufweist, wird somit in S5 die Reduktionsmitteldosierung deaktiviert.

Im Ergebnis wird im Fahrzeugbetrieb somit zwischen dem ersten Betriebsmodus, bei dem der SCR-Partikelfilter 16 unterhalb seines maximalen Füllstandes gemäß der Kennlinie F1 beladen wird, und dem zweiten Betriebsmodus, bei dem der SCR-Partikelfilter 16 gemäß der zweiten Füllstandskennlinie F2 überladen wird, hin- und hergeschaltet.

Erst wenn der SCR-Katalysator 18 eine untere Füllstandsschwelle erreicht, die mit einem gewissen Abstand nach unten gegenüber der in Figur 4 dargestellten Soll-Füllstandskennlinie vorgegeben wird, wird der zweite Betriebsmodus wieder aktiviert.

In der in Figur 2 dargestellten Verfahrensführung erfolgt die Aktivierung des SCR-Katalysators 18 ausschließlich in Abhängigkeit von seiner Temperatur T_SCR sowie seines Reduktionsmittelfüllstandes NH3_SCR_ist. Nach einer vorteilhaften Ausbildung des Verfahrens, welche hier nicht dargestellt ist, kann als weiteres Kriterium für die Aktivierung der Beladung des nachgeschalteten SCR-Katalysators 18 ein Mindest-NOₓ-Massenstrom des Abgases gefordert werden. In diesem Fall wird bei niedrigen NOₓ-Massenströmen lediglich der SCR-Partikelfilter 16 mit Reduktionsmitteln beladen, das heißt entsprechend seiner ersten Kennlinie F1 im Füllstandsbetrieb betrieben. Nur wenn der NOₓ-Massenstrom eine Schwelle erreicht, die die zusätzliche Konvertierungsleistung des SCR-Katalysators 18 erfordert, wird auch dieser mit Reduktionsmittel beladen, das heißt der motornahe SCR-Partikelfilter 16 mit Reduktionsmittel überladen.

### Bezugszeichenliste

- 10: Verbrennungsmotor
- 12: Abgaskanal
- 14: SCR-Katalysatorsystem
- 16: SCR-Abgasreinigungseinrichtung / SCR-Partikelfilter
- 18: SCR-Katalysator
- 20: Reduktionsmitteldosiereinrichtung
- 22: Reduktionsmittel-Vorratsbehälter
- 24: Düse
- 26: Temperatursensor
- 28: NOₓ-Sensor
- 30: NOx-Sensor
- 32: Steuerung

## Patentansprüche

1. Verfahren zum Betreiben einer Reduktionsmitteldosierung eines SCR-Katalysatorsystems (14) eines Verbrennungsmotors (10), wobei das SCR-Katalysatorsystem (14) eine erste SCR-Abgasreinigungseinrichtung (16) und einen, dieser nachgeschalteten SCR-Katalysator (18) aufweist sowie eine Reduktionsmitteldosiereinrichtung (20) zur Dosierung eines Reduktionsmittels in den Abgasstrom stromauf der ersten SCR-Abgasreinigungseinrichtung (16), wobei die Reduktionsmitteldosierung zumindest in Abhängigkeit von einer Temperatur der ersten SCR-Abgasreinigungseinrichtung (16) und des nachgeschalteten SCR-Katalysators (18) gesteuert wird, wobei
(I) wenn die Temperatur der ersten SCR-Abgasreinigungseinrichtung (16) größer oder gleich einer vorbestimmten Mindesttemperatur (T_SPF_min) ist und der nachgeschaltete SCR-Katalysator (18) kleiner als eine vorbestimmte Mindesttemperatur (T_SCR_min) ist, die Reduktionsmitteldosierung in einem ersten Betriebsmodus so erfolgt, dass ein Reduktionsmittelfüllstand (NH3_SPF) der ersten SCR-Abgasreinigungseinrichtung (16) kleiner als ihr maximaler Reduktionsmittelfüllstand (NH3_SPF_max) ist, und
(II) wenn die Temperatur des nachgeschalteten SCR-Katalysators (18) größer oder gleich seiner Mindesttemperatur (T_SCR_min) ist, die Reduktionsmitteldosierung zumindest zeitweise in einem zweiten Betriebsmodus so erfolgt, dass der Reduktionsmittelfüllstand (NH3_SPF) der ersten SCR-Abgasreinigungseinrichtung (16) größer ist als ihr maximaler Reduktionsmittelfüllstand (NH3_SPF_max), sodass ein die erste SCR-Abgasreinigungseinrichtung (16) passierender Reduktionsmitteldurchbruch den nachgeschalteten SCR-Katalysator (18) beaufschlagt.

2. Verfahren nach Anspruch 1, **dadurch gekennzeichnet, dass** das SCR-Katalysatorsystem (14) zusätzlich einen Partikelfilter umfasst oder die erste SCR-Abgasreinigungseinrichtung (16) als ein, eine katalytische SCR-Beschichtung aufweisender Partikelfilter ausgebildet ist.

3. Verfahren nach Anspruch 1 oder 2, **dadurch gekennzeichnet, dass** der Reduktionsmittelfüllstand (NH3_SPF) der ersten SCR-Abgasreinigungseinrichtung (16) in dem ersten und dem zweiten Betriebsmodus entsprechend zwei unterschiedlichen temperaturabhängigen Soll-Füllstandskennlinien (F1, F2) gesteuert wird.

4. Verfahren nach einem der vorhergehenden Ansprüche, **dadurch gekennzeichnet, dass** im zweiten Betriebsmodus ein Soll-Füllstand (NH3_SCR_soll) des SCR-Katalysators (18) über den Reduktionsmittelfüllstand (NH3_SPF) der ersten SCR-Abgasreinigungseinrichtung (16) temperaturabhängig gesteuert wird.

5. Verfahren nach Anspruch 4, **dadurch gekennzeichnet, dass** der zweite Betriebsmodus beendet wird, wenn der Reduktionsmittelfüllstand (NH3_SCR) des SCR-Katalysators (18) seinen temperaturabhängigen Soll-Füllstand (NH3_SCR_soll) erreicht oder überschreitet und/oder wenn die Temperatur des SCR-Katalysators (18) unterhalb seiner Mindesttemperatur (T_SCR_min) fällt.

6. Verfahren nach Anspruch 5, **dadurch gekennzeichnet, dass** nach Beendigung des zweiten Betriebsmodus die Reduktionsmitteldosierung wieder nach dem ersten Betriebsmodus so betrieben wird, dass der Reduktionsmittelfüllstand (NH3_SPF) der ersten SCR-Abgasreinigungseinrichtung (16) kleiner als ihr maximaler Reduktionsmittelfüllstand (NH3_SPF_max) ist, solange bis der Reduktionsmittelfüllstand (NH3_SCR) des SCR-Katalysators (18) einen vorbestimmen temperaturabhängigen Mindest-Füllstand (NH3_SCR_min) des SCR-Katalysators (18) erreicht oder unterschreitet und wenn die Temperatur des SCR-Katalysators (18) größer oder gleich seiner Mindesttemperatur (T_SCR_min) ist.

7. Verfahren nach einem der vorhergehenden Ansprüche, **dadurch gekennzeichnet, dass** als ein weiteres Kriterium für die Reduktionsmitteldosierung gemäß dem zweiten Betriebsmodus das Überschreiten eines vorbestimmten NOₓ-Massenstroms des Abgases gefordert wird.

8. Verfahren nach einem der vorhergehenden Ansprüche, **dadurch gekennzeichnet, dass** der Reduktionsmittelfüllstand (NH3_SPF; NH3_SCR) der ersten SCR-Abgasreinigungseinrichtung (16) und/oder des nachgeschalteten SCR-Katalysators (18) in Abhängigkeit von einem Reduktionsmitteleintrag, einem Reduktionsmittelverbrauch und einem Reduktionsmittelaustrag ermittelt wird.

9. Verfahren nach Anspruch 8, **dadurch gekennzeichnet, dass** der Reduktionsmittelfüllstand (NH3_SPF) der ersten SCR-Abgasreinigungseinrichtung (16) in Abhängigkeit von einer zudosierten Reduktionsmittelmenge, NOₓ-Rohemissionen des Verbrennungsmotors (10) sowie einer Reduktionsmitteldesorption und/oder eines Reduktionsmitteldurchbruchs der ersten SCR-Abgasreinigungseinrichtung (16) ermittelt wird.

10. Verfahren nach einem der Ansprüche 8 oder 9, **dadurch gekennzeichnet, dass** der Reduktionsmittelfüllstand (NH3_SCR) des SCR-Katalysators (18) in Abhängigkeit von einem Reduktionsmitteldurchbruch und einer Reduktionsmitteldesorption der ersten SCR-Abgasreinigungseinrichtung (16) sowie eines Reduktionsmittelverbrauchs des SCR-Katalysators (18) ermittelt wird.

11. Verfahren nach einem der vorhergehenden Ansprüche, **dadurch gekennzeichnet, dass** das Reduktionsmittel Ammoniak (NH₃) ist oder eine Vorläuferverbindung von Ammoniak, insbesondere Harnstoff, vorzugsweise eine wässrige Harnstofflösung.

12. SCR-Katalysatorsystem (14) eines Verbrennungsmotors (10), mit einer ersten, motornahen SCR-Abgasreinigungseinrichtung (16) und einem, dieser nachgeschalteten SCR-Katalysator (18) sowie einer Reduktionsmitteldosiereinrichtung (20) zur Dosierung eines Reduktionsmittels in den Abgasstrom stromauf der ersten SCR-Abgasreinigungseinrichtung (16), **gekennzeichnet, durch** eine Steuerung (32), die eingerichtet ist, das Verfahren zum Betreiben einer Reduktionsmitteldosierung nach einem der Ansprüche 1 bis 11 auszuführen.

## Claims

1. Method for operating a reducing agent metering system of an SCR catalytic converter system (14) of an internal combustion engine (10), wherein the SCR catalytic converter system (14) has a first SCR exhaust gas purification device (16) and an SCR catalytic converter (18) connected downstream of the latter, as well as a reducing agent metering device (20) for metering a reducing agent into the exhaust gas flow upstream of the first SCR exhaust gas purification device (16), wherein the metering of the reducing agent is controlled at least as a function of a temperature of the first SCR exhaust gas purification device (16) and the SCR catalytic converter (18) which is connected downstream, wherein
(I) if the temperature of the first SCR exhaust gas purification device (16) is higher than or equal to a predetermined minimum temperature (T_SPF_min) and the SCR catalytic converter (18) which is connected downstream is lower than a predetermined minimum temperature (T_SCR_min), the metering of the reducing agent takes place in a first operating mode in such a way that a reducing agent filling level (NH3_SPF) of the first SCR exhaust gas purification device (16) is lower than its maximum reducing agent filling level (NH3_SPF_max), and
(II) if the temperature of the SCR catalytic converter (18) which is connected downstream is higher than or equal to its minimum temperature (T_SCR_min), the metering of the reducing agent takes place at least temporarily in a second operating mode, in such a way that the reducing agent filling level (NH3_SPF) of the first SCR exhaust gas purification device (16) is higher than its maximum reducing agent filling level (NH3_SPF_max), with the result that a reducing agent breakthrough which passes through the first SCR exhaust gas purification device (16) acts on the SCR catalytic converter (18) which is connected downstream.

2. Method according to Claim 1, **characterized in that** the SCR catalytic converter system (14) additionally comprises a particle filter, or the first SCR exhaust gas purification device (16) is embodied as a particle filter which has a catalytic SCR coating.

3. Method according to Claim 1 or 2, **characterized in that** the reducing agent filling level (NH3_SPF) of the first SCR exhaust gas purification device (16) is controlled in the first and second operating mode in accordance with two different temperature-dependent setpoint filling level characteristic curves (F1, F2).

4. Method according to one of the preceding claims, **characterized in that** in the second operating mode a setpoint filling level (NH3_SCR_setp) of the SCR catalytic converter (18) is controlled as a function of the temperature by means of the reducing agent filling level (NH3_SPF) of the first SCR exhaust gas purification device (16).

5. Method according to Claim 4, **characterized in that** the second operating mode is ended if the reducing agent filling level (NH3_SCR) of the SCR catalytic converter (18) reaches or exceeds its temperature-dependent setpoint filling level (NH3_SCR_setp) and/or if the temperature of the SCR catalytic converter (18) drops below its minimum temperature (T_SCR_min).

6. Method according to Claim 5, **characterized in that** after ending of the second operating mode the metering of the reducing agent is operated again according to the first operating mode in such a way that the reducing agent filling level (NH3_SPF) of the first SCR exhaust gas purification device (16) is lower than its maximum reducing agent filling level (NH3_SPF_max) until the reducing agent filling level (NH3_SCR) of the SCR catalytic converter (18) reaches or undershoots a predetermined temperature-dependent minimum filling level (NH3_SCR_min) of the SCR catalytic converter (18) and if the temperature of the SCR catalytic converter (18) is higher than or equal to its minimum temperature (T_SCR_min).

7. Method according to one of the preceding claims **characterized in that** the exceeding of a predetermined NOₓ mass flow of the exhaust gas is required as a further criterion for the metering of the reducing agent according to the second operating mode.

8. Method according to one of the preceding claims, **characterized in that** the reducing agent filling level (NH3_SPF; NH3_SCR) of the first SCR exhaust gas purification device (16) and/or of the SCR catalytic converter (18) which is connected downstream are/is determined as a function of an input of reducing agent, a consumption of reducing agent and a discharge of reducing agent.

9. Method according to Claim 8, **characterized in that** the reducing agent filling level (NH3_SPF) of the first SCR exhaust gas purification device (16) is determined as a function of a metered-in quantity of reducing agent, NOₓ raw emissions of the internal combustion engine (10) as well as a desorption of reducing agent and/or a breakthough of reducing agent of the first SCR exhaust gas purification device (16).

10. Method according to one of Claims 8 or 9, **characterized in that** the reducing agent filling level (NH3_SCR) of the SCR catalytic converter (18) is determined as a function of a breakthrough of reducing agent and a desorption of reducing agent of the first SCR exhaust gas purification device (16) and a consumption of reducing agent of the SCR catalytic converter (18).

11. Method according to one of the preceding claims, **characterized in that** the reducing agent is ammonia (NH₃) or a precursor compound of ammonia, in particular urea, preferably an aqueous urea solution.

12. SCR catalytic converter system (14) of an internal combustion engine (10), having a first SCR exhaust gas purification device (16) which is near to the engine, and an SCR catalytic converter (18) which is connected downstream of said SCR exhaust gas purification device (16), as well as a reducing agent metering device (20) for metering a reducing agent into the exhaust gas flow upstream of the first SCR exhaust gas purification device (16), **characterized by** a controller (32) which is configured to carry out the method for operating a reducing agent metering system according to one of Claims 1 to 11.

## Revendications

1. Procédé de réalisation d'un dosage d'agent réducteur d'un système catalytique SCR (14) d'un moteur à combustion (10), dans lequel le moyen catalytique SCR (14) présente un premier dispositif de purification de gaz d'échappement SCR (16) et un catalyseur (18) installé en aval de celui-ci et un dispositif de dosage d'agent réducteur (20) pour le dosage d'un agent réducteur dans le flux de gaz d'échappement en amont du premier dispositif de purification de gaz d'échappement SCR (16), le dosage d'agent réducteur étant commandé au moins en fonction d'une température du premier dispositif de purification de gaz d'échappement SCR (16) et du catalyseur SCR (18) installé en aval, sachant que,
(I) si la température du premier dispositif de purification de gaz d'échappement SCR (16) est supérieure ou égale à une température minimale prédéfinie (T_SPF_min) et si celle du catalyseur SCR (18) installé en aval est inférieure à une certaine température minimale prédéfinie (T SCR min), le dosage de l'agent réducteur se fait dans un premier mode de fonctionnement de manière à ce qu'un niveau de remplissage d'agent réducteur (NH3_SPF) du premier dispositif de purification de gaz d'échappement SCR (16) soit inférieur à son niveau de remplissage maximal d'agent réducteur (NH3_SPF_max) et,
(II) si la température du catalyseur SCR (18) installé en aval est supérieure ou égale à sa température minimale (T_SCR_min), le dosage d'agent réducteur se fait au moins périodiquement dans un second mode de fonctionnement de manière à ce que le niveau de remplissage d'agent réducteur (NH3_SPF) du premier dispositif de purification de gaz d'échappement SCR (16) soit supérieur à son niveau de remplissage maximal d'agent réducteur (NH3_SPF_max), de manière à ce qu'un afflux d'agent réducteur passant dans le premier dispositif de purification de gaz d'échappement SCR (16) sollicite le catalyseur SCR (18) installé en aval.

2. Procédé selon la revendication 1, **caractérisé en ce que** le système catalytique SCR (14) comprend en outre un filtre à particules ou que le premier dispositif de purification de gaz d'échappement SCR (16) est réalisé sous forme d'un filtre à particules présentant un revêtement catalytique SCR.

3. Procédé selon la revendication 1 ou 2, **caractérisé en ce que** le niveau de remplissage d'agent réducteur (NH3_SPF) du premier dispositif de purification de gaz d'échappement SCR (16) est contrôlé dans le premier et le second mode de fonctionnement en fonction de deux caractéristiques différentes de niveau de remplissage théorique dépendant de la température (F1, F2).

4. Procédé selon l'une quelconque des revendications précédentes, **caractérisé en ce que**, dans le second mode de fonctionnement, un niveau de remplissage théorique (NH3_SCR_soll) du catalyseur SCR (18) est contrôlé via le niveau de remplissage d'agent réducteur (NH3_SPF) du premier dispositif de purification de gaz d'échappement SCR (16) en fonction de la température.

5. Procédé selon la revendication 4, **caractérisé en ce que** le second mode de fonctionnement cesse si le niveau de remplissage d'agent réducteur (NH3_SCR) du catalyseur SCR (18) atteint ou dépasse son niveau de remplissage théorique dépendant de la température (NH3_SCR_soll) et/ou si la température du catalyseur SCR (18) chute en dessous de sa température minimale (T_SCR_min).

6. Procédé selon la revendication 5, **caractérisé en ce que**, à la fin du second mode de fonctionnement, le dosage d'agent réducteur est de nouveau réalisé selon le premier mode de fonctionnement de manière à ce que le niveau de remplissage d'agent réducteur (NH3_SPF) du premier dispositif de purification de gaz d'échappement SCR (16) soit inférieur à son niveau de remplissage maximal d'agent réducteur (NH3_SPF_max) tant que le niveau de remplissage d'agent réducteur (NH3_SCR) du catalyseur SCR (18) atteint ou reste inférieur à un niveau de remplissage minimal prédéfini dépendant de la température (NH3_SCR_min) du catalyseur SCR (18) et si la température du catalyseur SCR (18) est supérieure ou égale à sa température minimale (T_SCR_min).

7. Procédé selon l'une quelconque des revendications précédentes, **caractérisé en ce que**, en tant qu'autre critère du dosage d'agent réducteur selon le second mode de fonctionnement, le dépassement d'un débit massique prédéfini de NOₓ du gaz d'échappement est favorisé.

8. Procédé selon l'une quelconque des revendications précédentes, **caractérisé en ce que** le niveau de remplissage d'agent réducteur (NH3_SPF; NH3_SCR) du premier dispositif de purification de gaz d'échappement SCR (16) et/ou du catalyseur SCR installé en aval (18) est déterminé en fonction d'une incorporation d'agent réducteur, d'une consommation d'agent réducteur et d'une extraction d'agent réducteur.

9. Procédé selon la revendication 8, **caractérisé en ce que** le niveau de remplissage d'agent réducteur (NH3_SPF) du premier dispositif de purification de gaz d'échappement SCR (16) est déterminé en fonction d'une quantité d'agent réducteur dosée, d'émissions brutes de NOₓ du moteur à combustion (10) et d'une désorption d'agent réducteur et/ou d'un afflux d'agent réducteur dans le premier dispositif de purification de gaz d'échappement SCR (16).

10. Procédé selon l'une quelconque des revendications 8 ou 9, **caractérisé en ce que** le niveau de remplissage d'agent réducteur (NH3_SCR) du catalyseur SCR (18) est déterminé en fonction d'un afflux d'agent réducteur et d'une désorption d'agent réducteur dans le premier dispositif de purification de gaz d'échappement SCR (16) et d'une consommation d'agent réducteur du catalyseur SCR (18).

11. Procédé selon l'une quelconque des revendications précédentes, **caractérisé en ce que** l'agent réducteur est de l'ammoniac (NH₃) ou un composé précurseur d'ammoniac, en particulier de l'urée, de préférence une solution aqueuse d'urée.

12. Système catalytique SCR (14) d'un moteur à combustion (10), comportant un premier dispositif de purification de gaz d'échappement SCR proche du moteur (16) et un catalyseur SCR (18) installé en aval de celui-ci, de même qu'un dispositif de dosage d'agent réducteur (20) pour doser un agent réducteur dans le flux de gaz d'échappement en amont du premier dispositif de purification de gaz d'échappement SCR (16), **caractérisé par** une commande (32) qui est conçue pour réaliser le procédé de réalisation d'un dosage d'agent réducteur selon l'une quelconque des revendications 1 à 11.
